# EUROPÄISCHE PATENTANMELDUNG

(11) **EP 1 936 364 A1**
(43) Veröffentlichungstag der Anmeldung: **25.06.2008**
(21) Anmeldenummer: 07024356.3
(22) Anmeldetag: 15.12.2007
(51) Int. Cl.: G01N 27/12

(54) **Sensor und Herstellungsverfahren eines Sensors**

(30) Priorität: 20.12.2006 DE 102006060113
(71) Anmelder: AppliedSensor GmbH, 72770 Reutlingen (DE)
(72) Erfinder: Raible, Stephan Dr., 72070 Tübingen (DE); Briand Danick, 2000 Neuchâtel (CH); Kappler, Jürgen Dr., 72108 Rottenburg (DE)
(74) Vertreter: Kohler Schmid Möbus

(57) **Zusammenfassung**

Bei einem Verfahren zur Herstellung von Sensoren (10), insbesondere Gassensoren, werden
a) in einem Wafersubstrat (11) Kavitäten (19) erzeugt;
b) in den Kavitäten (19) Messfühler (20) angeordnet;
c) die Kavitäten (19) mit einer Abdeckung (21) abgedeckt.

Ein derartig hergestellter Sensor ist kostengünstig und robust.

## Beschreibung

Die Erfindung betrifft ein Verfahren zur Herstellung von Sensoren, insbesondere Gassensoren.

Die Sensormaterialien von Gassensoren sind in aller Regel feuchtigkeitsempfindlich. Sie sollten nur in einer entsprechend gegen Flüssigkeiten geschützten Umgebung eingesetzt werden. Auch die Herstellung einer Vielzahl solcher Sensoren durch Aufbringen der Materialien auf einen Wafer ist nur unter Anwendung von Spezialtechniken zum Vereinzeln der einzelnen Sensoren aus dem gemeinsamen Wafer möglich. Die standardmäßig zum Vereinzeln eingesetzten Verfahren verwenden meist Wasser, das beim Vereinzelungsvorgang den Wafer benetzt und die gassensitive Schicht schädigen bzw. zerstören kann.

Um diesbezüglich Abhilfe zu schaffen schlägt die DE 102 04 458 A1 einen Gassensor mit mindestens einem Sensorbereich, der von einem auf ein Substrat aufgebrachten, gassensitiven Material gebildet ist, vor, wobei mindestens der oder die Sensorbereiche von einer gasdurchlässigen, aber flüssigkeitsundurchlässigen Abdeckung überdeckt sind. Nachteilig dabei ist, dass die Kontakte der Elektroden des Sensors unter der Abdeckung herausgeführt werden müssen.

Aufgabe der vorliegenden Erfindung ist es, einen Gassensor zu schaffen, der auch in feuchtigkeitsbehafteter Umgebung einsetzbar ist, sowie ein rationelles, kostengünstiges Verfahren zur Herstellung vorzuschlagen.

Diese Aufgabe wird erfindungsgemäß auf überraschende sowie einfache Art und Weise durch ein Verfahren der eingangs genannten Art gelöst, wobei
a) in einem Wafersubstrat Kavitäten erzeugt werden;
b) in den Kavitäten Messfühler (sensing element) angeordnet werden;
c) die Kavitäten mit einer Abdeckung abgedeckt werden.

Der Messfühler eines derart hergestellten Sensors ist besonders gut geschützt, so dass ein problemloses Vereinzeln der Sensoren mit üblichen Verfahren, beispielsweise Sägen, erfolgen kann. Weiterhin stellt dieses Verfahren ein besonders einfaches Herstellungsverfahren dar. Auch kann ein derart hergestellter Sensor einfacher und billiger montiert werden.

Die Abdeckung ist vorzugsweise gasdurchlässig aber flüssigkeitsundurchlässig. Dann kann die Abdeckung im Betrieb verbleiben. Bei besonderen Anwendungen kann es erwünscht sein, dass die Sensoren im Betrieb keine Abdeckung aufweisen.

Vorzugsweise werden die Kavitäten mittels Ionenstrahlschneiden, reaktivem Trockenätzen (Dry Reactive Ion Etching (DRIE)) oder Nassätzen, insbesondere mittels K_{OH}, von der Rückseite des Wafersubstrats her erzeugt. Dies bedeutet, dass die Kavität nicht umständlich mittels Schichtaufbau auf der Vorderseite des Wafers erzeugt werden muss.

Der Messfühler kann insbesondere für einen Gassensor auf besonders einfache Art und Weise erzeugt werden, indem jeweils ein gassensitiver Film mittels Drop-coating oder im Flying-Drop-Verfahren in die Kavitäten eingebracht wird. In diesem Fall dient die Abdeckung lediglich dem Schutz der Messfühler bis die Sensoren zum Einsatz kommen. Die Abdeckung kann vor Inbetriebnahme abgenommen werden. Der gassensitive Film kann gegebenenfalls vor oder nach dem Anbringen einer Abdeckung auf den Kavitäten durch Erhitzen gehärtet werden. Dadurch kann eine Beschädigung der Membran verhindert werden. Der gassensitive Film wird also vorzugsweise ohne mechanische Berührung der Kavität aufgebracht.

Eine besonders bevorzugte Verfahrensvariante zeichnet sich dadurch aus, dass auf der Oberseite (Vorderseite) des Wafersubstrats zunächst eine erste isolierende Schicht, insbesondere eine SiO₂- oder Si₃N₄-Schicht, und darauf Elektroden aufgebracht werden. Somit können die Elektroden in herkömmlichen Verfahrensschritten auf der Oberseite des Wafers hergestellt werden.

Bei einer Weiterbildung des Verfahrens kann vorgesehen sein, dass eine zweite isolierende Schicht, insbesondere eine Si₃N₄- oder SiO₂-Schicht, und darauf im Bereich der Elektroden Heizelemente aufgebracht werden. Durch die zweite isolierende Schicht werden die Heizelemente von den Elektroden elektrisch isoliert. Die Heizelemente werden vorzugsweise in einem Bereich angeordnet, in dem später die Kavität erzeugt wird und somit der Messfühler angeordnet wird. Die Heizelemente können dadurch dazu verwendet werden, die Messung mit dem Messfühler zu unterstützen.

Besonders vorteilhaft ist es, wenn nach dem Erzeugen der Kavitäten in dem Wafersubstrat die erste isolierende Schicht im Bereich der Kavitäten entfernt wird. Durch diese Maßnahme werden die Elektroden, die auf der ersten isolierenden Schicht angeordnet sind, freigelegt, so dass das gassensitive Material, welches in die Kavitäten eingebracht wird, ohne weiteres mit den Elektroden in Kontakt gerät. Dabei werden die Elektroden durch die zweite isolierende Schicht ortsfest gehalten.

In den Rahmen der Erfindung fällt außerdem ein Sensor, insbesondere ein Gassensor, mit einer im Wafersubstrat (Substratmaterial) ausgebildeten Kavität, in der ein Messfühler angeordnet ist. Die Kavität kann mit einer Abdeckung abgedeckt sein. Diese kann auch im Betrieb vorhanden sein oder sie kann nur unmittelbar nach der Herstellung vorhanden sein und für den Betrieb zur Aktivierung des Sensors abgezogen werden. Der erfindungsgemäße Sensor wird vorzugsweise mit dem erfindungsgemäßen Verfahren hergestellt.

Wenn der Sensor als Gassensor eingesetzt werden soll, ist es vorteilhaft, wenn die Messfühler aus gassensitivem Material ausgebildet sind. Dieses kann auf besonders einfache Art und Weise in einem so genannten Drop-Coating-Verfahren oder Flying-Drop-Verfahren aufgebracht werden.

Bei einer besonders bevorzugten Ausführungsform kann vorgesehen sein, dass im Kavitätsgrund Elektroden angeordnet sind. Die Kavität kann erzeugt werden, indem das Material hinter den Elektroden von der Waferrückseite her bis zu den Elektroden entfernt wird. Wird in die so geschaffene Kavität der Messfühler bzw. das Material für die Messfühler eingebracht, so kann eine unmittelbare Kontaktierung mit den Elektroden erfolgen. Die Elektroden können von der Wafervorderseite her kontaktiert werden, so dass die Elektroden nicht unter einer Abdeckung der Kavität herausgeführt werden müssen. Die Elektroden und die Isolationsschicht, in oder an der die Elektroden angeordnet sind, verschließen die Kavität auf der gegenüberliegenden Seite.

Damit Gase an den Messfühler in der Kavität gelangen können, Flüssigkeit jedoch von dem Messfühler fern gehalten wird, ist es vorteilhaft, wenn die Abdeckung gasdurchlässig aber flüssigkeitsundurchlässig ist.

Wenn die Kontakte auf der der Abdeckung abgewandten Seite des Sensors vorgesehen sind ist eine besonders einfache Montage des Sensors, beispielsweise auf einer Platine möglich. Insbesondere sind unterschiedliche Arten der Kontaktierung des Sensors möglich. Beispielsweise können die Sensoren auf einer Leiterplatte montiert werden, die Durchgangsöffnungen aufweist, wobei die Sensoren so montiert werden, dass die gasdurchlässige Abdeckung leiterplattenseitig montiert ist und die Kavität im Bereich der Durchgangsöffnung angeordnet ist. In diesem Fall werden vorzugsweise Drähte zur Kontaktierung verwendet. Alternativ ist es möglich, den Sensor so auf der Leiterplatte zu montieren, dass die Kontakte des Sensors unmittelbar mit Kontaktstellen der Leiterplatte verlötet werden. Weiterhin können die Sensoren besonders einfach in einen Kunststoffhalter montiert und mit metallischen Kontakten des Kunststoffhalters verbunden werden. Zudem ist es denkbar, die Sensoren in einem automatisierten Verfahren auf einem Leitungsband anzuordnen. Zudem ist eine Montage auf handelsüblichen Kunststoff- und Metallgehäusen möglich.

Weitere Merkmale und Vorteile der Erfindung ergeben sich aus der nachfolgenden detaillierten Beschreibung von Ausführungsbeispielen der Erfindung anhand der Figuren der Zeichnung, die erfindungswesentliche Einzelheiten zeigt, sowie aus den Ansprüchen. Die einzelnen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt, welche in der nachfolgenden Beschreibung näher erläutert werden.

Es zeigen:
- Fig. 1: eine Schnittdarstellung durch einen Sensor in einem Zwischenschritt während seiner Herstellung;
- Fig. 2: eine Schnittdarstellung durch einen fertigen Sensor;
- Fig. 3: eine erste Möglichkeit der Montage eines Sensors;
- Fig. 4: eine zweite Möglichkeit der Montage eines Sensors.

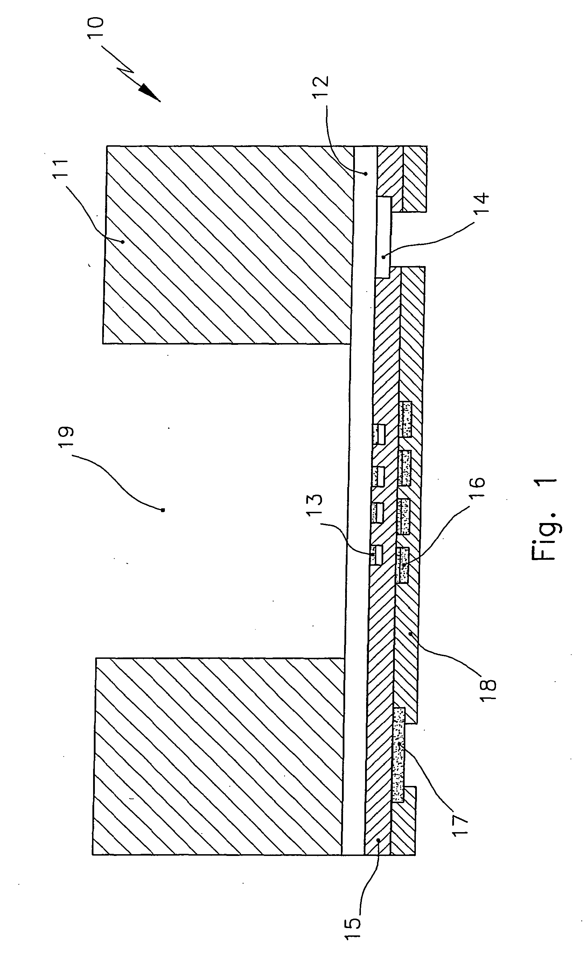

In der Figur 1 ist ein Sensor 10, insbesondere ein Gassensor, während eines Zwischenschritts seiner Herstellung gezeigt. Die Herstellung des Sensors 10 beginnt damit, dass auf der Oberseite eines Wafersubstrats 11, vorzugsweise aus Silizium, eine erste isolierende Schicht 12, vorzugsweise SiO₂, aufgebracht wird. Anschließend werden Elektroden 13 auf der ersten isolierenden Schicht definiert. Diese sind elektrisch leitend mit einem ersten Kontakt 14 verbunden. Anschließend wird eine zweite elektrisch isolierende Schicht 15, vorzugsweise Si₃N₄ aufgebracht. Im Bereich der Elektroden 13 werden Heizelemente 16 definiert, die elektrisch leitend mit einem Kontakt 17 verbunden sind. Den Abschluss bildet eine Passivierungsschicht 18. Nun wird von der Waferrückseite eine Kavität 19, vorzugsweise durch Trockenätzen oder Nassätzen mittels K_{OH}, hergestellt, wobei zunächst bis zur ersten isolierenden Schicht 12 geätzt wird. Die Kavität 19 wird im Bereich der Elektroden 13 hergestellt.

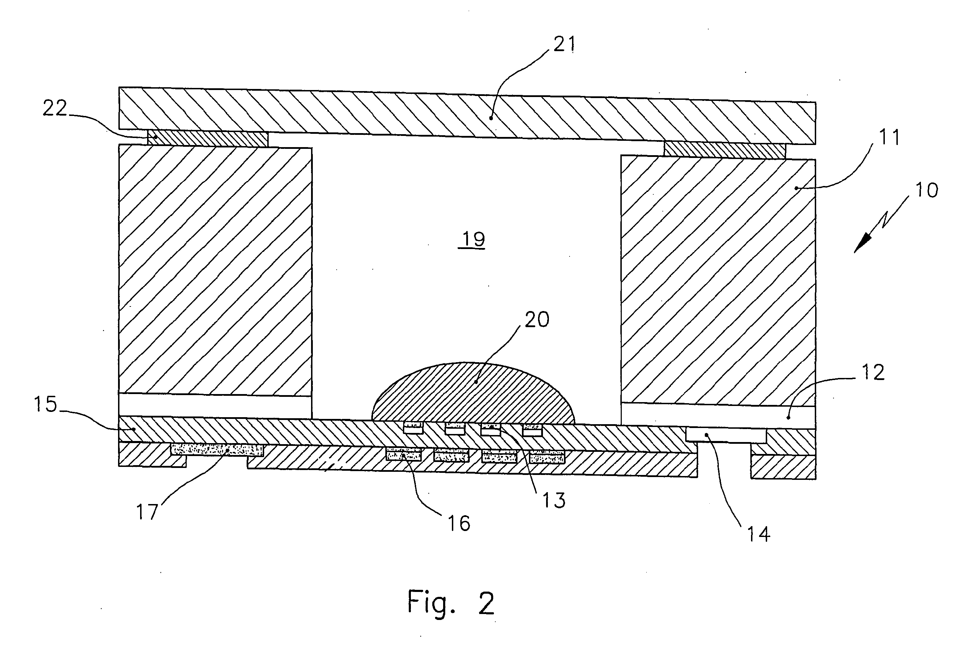

Ausweislich der Figur 2 wird im Bereich der Kavität 19 auch die erste isolierende Schicht 12 entfernt, so dass die Elektroden 13 zur Kavität 19 hin exponiert sind. Auf die Elektroden 13 wird nun ein gassensitives Material als Messfühler 20 aufgebracht. Um den Messfühler 20 vor Flüssigkeit zu schützen, wird eine gasdurchlässige, aber flüssigkeitsundurchlässige Abdeckung 21 aufgebracht und mit der Waferrückseite beispielsweise verklebt, was durch die Bezugsziffer 22 angedeutet ist. Aus dieser Darstellung wird deutlich, dass die Kontakte 14, 17 auf der Wafervorderseite liegen und nicht unter der Abdeckung 21 hervorgeführt werden müssen. Außerdem wird deutlich, dass der Messfühler 20 durch die Abdeckung 21, das Wafersubstrat 11 und die zweite isolierende Schicht 15 vollständig geschützt ist. Mehrere Sensoren 10, die auf einem Wafer hergestellt werden, können daher mit herkömmlichen Methoden, beispielsweise durch Sägen unter Wassereinsatz, vereinzelt werden, ohne dass eine Beeinträchtigung der Sensorfunktionalität zu befürchten ist.

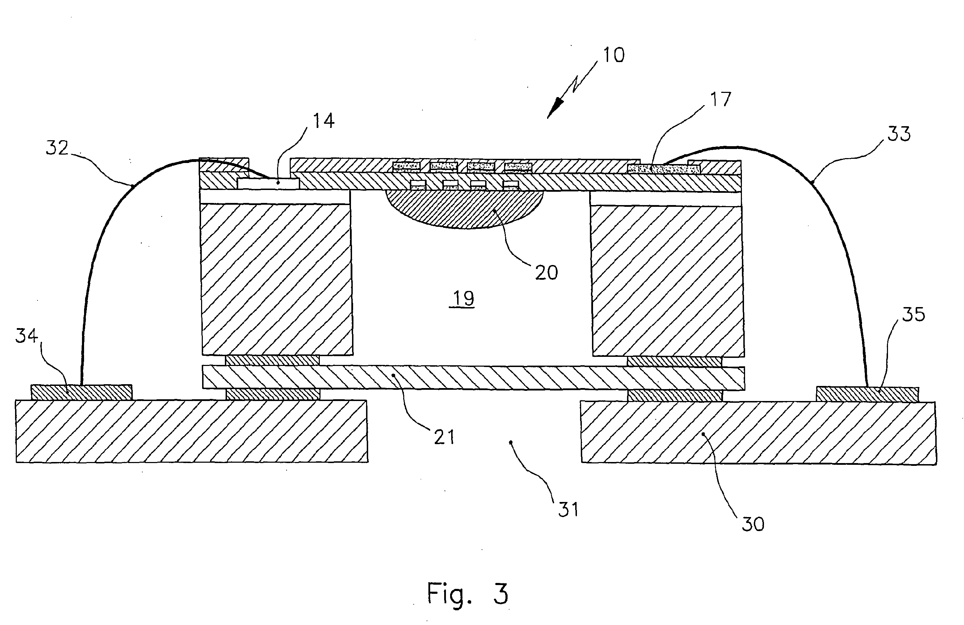

In der Figur 3 ist eine erste Möglichkeit gezeigt, wie der Sensor 10 auf einer Leiterplatte 30 (Platine) montiert werden kann. In diesem Ausführungsbeispiel weist die Leiterplatte 30 eine Durchgangsöffnung 31 auf. Dieser Durchgangsöffnung 31 gegenüber wird die Kavität 19 des Sensors 10 angeordnet. Leiterplattenseitig ist dabei die Abdeckung 21, die gasdurchlässig ist, vorgesehen. Somit kann ein zu sensierendes Gas über die Durchgangsöffnung 31 durch die Abdeckung 21 in die Kavität 19 und hier zum Messfühler 20 gelangen. Die Abdeckung 21 kann dabei auf die Leiterplatte 30 geklebt sein. Die Kontaktierung des Sensors 10 erfolgt über Drähte 32, 33, die sowohl mit den Kontakten 14, 17 des Sensors als auch mit Kontaktstellen 34, 35 der Leiterplatte verbunden sind. Anstelle der Leiterplatte könnten auch andere geeignete Materialien eingesetzt werden, beispielsweise ein Leiterband (conductor tape).

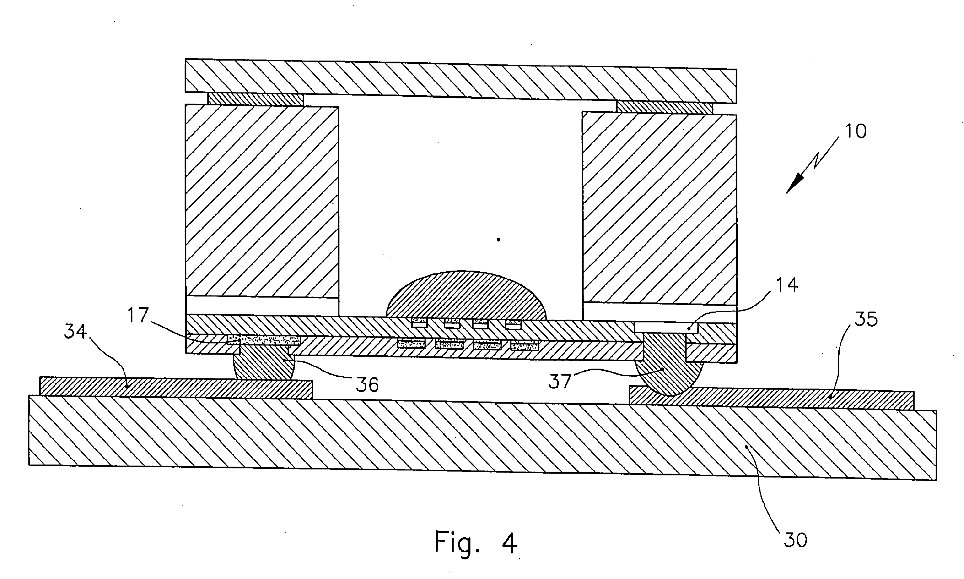

In der Figur 4 ist eine alternative Montagemöglichkeit gezeigt. Hier sind die Kontakte 14, 17 des Sensors 10 unmittelbar mit Kontaktstellen 34, 35 der Platine 30 verlötet, was durch die Lötstellen 36, 37 angedeutet ist. Auch bei dieser Montageart könnte anstatt der Leiterplatte 30 eine andere geeignete Unterlage verwendet werden.

## Patentansprüche

1. Verfahren zur Herstellung von Sensoren (10), insbesondere Gassensoren, **dadurch gekennzeichnet, dass**
a) in einem Wafersubstrat (11) Kavitäten (19) erzeugt werden;
b) in den Kavitäten (19) Messfühler (20) (sensing element) angeordnet werden;
c) die Kavitäten (19) mit einer Abdeckung (21) abgedeckt werden.

2. Verfahren nach Anspruch 1, **dadurch gekennzeichnet, dass** die Kavitäten (19) mittels Ionenstrahlschneiden, reaktivem Trockenätzen (Dry Reactive Ion Etching (DRIE)) oder Nassätzen von der Rückseite des Wafersubstrats (11) her erzeugt werden.

3. Verfahren nach einem der vorhergehenden Ansprüche, **dadurch gekennzeichnet, dass** die Messfühler (20) erzeugt werden, indem jeweils ein gassensitiver Film mittels Drop-coating oder im Flying-Drop-Verfahren in die Kavitäten (19) eingebracht wird.

4. Verfahren nach einem der vorhergehenden Ansprüche, **dadurch gekennzeichnet, dass** auf der Oberseite des Wafersubstrats (11) zunächst eine erste isolierende Schicht (12), insbesondere eine SiO₂-oder Si₃N₄-Schicht, und darauf Elektroden (13) aufgebracht werden.

5. Verfahren nach Anspruch 4, **dadurch gekennzeichnet, dass** eine zweite isolierende Schicht (15), insbesondere eine Si₃N₄-oder SiO₂-Schicht, und darauf im Bereich der Elektroden (13) Heizelemente (16) aufgebracht werden.

6. Verfahren nach einem der vorhergehenden Ansprüche, **dadurch gekennzeichnet, dass** nach dem Erzeugen der Kavitäten (19) in dem Wafersubstrat (11) die erste isolierende Schicht (12) im Bereich der Kavitäten (19) entfernt wird.

7. Sensor, insbesondere Gassensor, mit einer im Wafersubstrat (11) ausgebildeten Kavität (19), in der ein Messfühler (20) angeordnet ist.

8. Sensor nach Anspruch 7, **dadurch gekennzeichnet, dass** die Kavität (19) mit einer Abdeckung (21) abgedeckt ist.

9. Sensor nach Anspruch 7 oder 8, **dadurch gekennzeichnet, dass** die Messfühler (20) aus gassensitivem Material ausgebildet sind.

10. Sensor nach einem der Ansprüche 7 bis 9, **dadurch gekennzeichnet, dass** im Kavitätsgrund Elektroden (13) angeordnet sind.

11. Sensor nach einem der vorhergehenden Ansprüche 7 bis 10, **dadurch gekennzeichnet, dass** die Abdeckung (21) gasdurchlässig aber flüssigkeitsundurchlässig ist.

12. Sensor nach einem der vorhergehenden Ansprüche 7 bis 11, **dadurch gekennzeichnet, dass** Kontakte (14, 17) auf der der Abdeckung (21) abgewandten Seite des Sensors (10) vorgesehen sind.
